# EUROPEAN PATENT SPECIFICATION

(11) **EP 1 375 524 B1**
(45) Date of publication and mention of the grant of the patent: **07.03.2007**
(21) Application number: 02077534.2
(22) Date of filing: 20.06.2002
(51) Int. Cl.: C08B 37/10

(54) **Process for the preparation of esters of heparin**
Verfahren zur Herstellung von Heparinestern
Procédé de préparation d'esters d'héparine

(43) Date of publication of application: 02.01.2004
(73) Proprietor: CHEMI S.p.A., 20092 Cinisello Balsamo (Milano) (IT)
(72) Inventor: De Ferra, Lorenzo, 00162 Roma (IT); Montorsi, Mauro, 4110 Modena (IT)
(74) Representative: Pistolesi, Roberto

(56) References cited:
- EP-A- 0 040 144
- EP-A- 0 380 719
- WO-A-02/08295
- US-A- 4 440 926
- US-A- 5 389 618

## Description

The present invention relates to a process for the preparation of esters of heparin, wherein carboxylic groups are esterified partially or totally with a R-CH₂- radical, where R is preferably a non-substituted or substituted phenyl group, by reaction with a halogenated reagent having the formula R-CH₂-X in N,N-dimethylformamide at a temperature of between 35° and 90°C for a reaction time of between 1 and 20 hours.

### PRIOR ART

The present invention relates to a process for the preparation of esters of heparin which are useful as intermediates in the synthesis of heparin having a low molecular weight, in particular of Enoxaparin (Common International Denomination - CID), a principal active ingredient with anti-coagulant and anti-thrombotic action, whose preparation is described in European patent application EP-40144 and in American patent US-5389618, both incorporated herein by reference.

The therapeutic use of Enoxaparin is, in particular, described in detail in various scientific publications, such as, for example, Frydman et al., J. Clin. Pharmacol., 1988; 28:609-618; Planes et al., Haemostasis, 16:152-158, 1986; Dahan et al., 16:152-158, 1986; Huet et al., 16:152-158, 1986; Aiach et al., Thrombosis Res., 31:611-621, 1983; Neville et al., Journal of Pharmaceutical Sciences, Vol. 78, no. 2, February 1989; Neville et al., Journal of Pharmaceutical Sciences, Vol. 79, no. 4, April 1990.

It is known from the prior art, in particular from European patent applications EP-40144 and EP-380719, from International patent application WO 02/08295 and from American patent US-4440926, to prepare esters of heparin which are derived by the partial or total esterification of the carboxylic groups which are present in the structure of heparin; the esters in question are intermediates useful in the preparation, via alkaline hydrolysis with consequent de-polymerisation, of heparins having low molecular weight, such as, for example, Enoxaparin, which have pharmacological advantages over the basic heparin, in particular as regards a substantial reduction in the anti-coagulant activity, and therefore in the haemorrhagic risk, which is greatly feared above all in surgery.

In greater detail, EP-40144 and US-4440926 describe the partial or complete esterification of the carboxylic groups which are present in the polymer chain of the heparin, by introducing the group R-CH₂- by treatment of a quaternary ammonium salt of heparin with a large stoichiometric excess, of from 10 to 30 times the amount necessary to esterify the carboxylic groups present in the polymer chain of the heparin, of a halogenated reagent having the formula R-CH₂-X, where R can have a number of meanings, R preferably being a phenyl group, non-substituted or substituted by a halogen atom or by a nitro group, and X is a halogen atom, preferably a chlorine atom; the halogenated reagent is preferably benzyl chloride.

The esterification reaction described in the prior art cited is carried out with the large excess of halogenated reagent for a very long period of time, from 24 to 72 hours, usually at ambient temperature. Large quantities of solvent, normally in the order of 20ml of solvent per gramme of quaternary ammonium salt of heparin, are further used in EP-40144 and US-4440926.

This process for esterifying heparin which is carried out according to the teaching of patents EP-40144 and US-4440926 leads to substantial disadvantages from the economic, industrial and environmental points of view in that both the substantial excess of the solvent and that of the halogenated agent increase the production costs considerably, make the separation of the excess of halogenated reagent and the purification of the ester of heparin difficult and costly, and make the disposal of the reaction refluents costly and environmentally harmful. Furthermore, the long reaction times, of from 24 to 72 hours, constitute a very negative factor of the use of the installations from the economic/industrial point of view.

A further significant problem of the processes described in EP-40144 and US-4440926 is linked to the fact that the halogenated reagents having the formula R-CH₂-X, such as, for example, benzyl chloride, are strong lachrymatory agents; their use in large quantities in processes on an industrial scale therefore poses significant problems from the point of view of safety at work.

### DESCRIPTION OF THE INVENTION

Therefore, the object of the present invention is to provide a process for the production of esters of heparin, which can be used for the subsequent production of Enoxaparin, according to the teaching of European patent application EP 40144 and American patent US-5389618, which is free from the above-mentioned disadvantages.

In particular, the subject-matter of the present invention allows all of the serious negative aspects which are present in the above-described prior art to be overcome by providing an industrially economic and environmentally sound process for the preparation of esters of heparin which are useful as intermediates in the synthesis of heparin having low molecular weight, which is universally known as Enoxaparin.

The subject-matter of the present invention consists in a process for the preparation of esters of heparin, wherein carboxylic groups are esterified partially or completely by means of the partial or complete substitution of the hydrogen atoms or of the cations which salify the carboxylic groups by the radical R-CH₂-, where R represents a hydrogen atom or an aliphatic or aromatic group which is substituted or non-substituted, preferably by a halogen atom or by a nitro group.

This preparation is effected by reacting from 0.5 to 1.5 parts by weight of a halogenated reagent having the formula R-CH₂-X, where R is a phenyl group which is non-substituted or substituted by a halogen atom or by a nitro group, and X is a halogen atom, preferably chlorine, with from 8 to 16 parts by weight of one of the quaternary ammonium salts of heparin in from 60 to 150 parts by volume of an inert organic solvent selected from N,N-dimethylformamide, N,N-dimethylacetamide and methylene chloride at a temperature of between 35°C and 60°C for a period of time of between 1 hour and 20 hours.

For the purposes of the present invention, the above-described parts by weight are to be understood to be in grammes and the parts by volume in millilitres. Therefore, according to a preferred feature of the invention, from 0.5 to 1.5g of halogenated reagent are reacted with from 8 to 16g of quaternary ammonium salt in from 60 to 150ml of solvent; even more preferably, from 0.8 to 1.2g of halogenated reagent are reacted with from 10 to 14g of quaternary ammonium salt in from 80 to 120ml of solvent.

According to a feature of the invention, a quantity of a quaternary ammonium salt of heparin such as to contain a stoichiometric equivalent of carboxylic groups is reacted with from 0.6 to 1.5 stoichiometric equivalents of a halogenated reagent having the formula R-CH₂-X, where R has the above-mentioned meaning and X represents a halogen atom, in an inert solvent at a temperature of between 35°C and 60°C for a reaction time of between 1 and 8 hours and the ester so obtained is precipitated from the reaction medium, cooled to ambient temperature by the addition of a solution of sodium acetate in methyl alcohol.

The above-mentioned quaternary ammonium salt of heparin can be produced according to one of the processes which are already known in the art, such as precisely those described in European patent application EP-40144 and in American patent US-5389618; in turn, the heparin used for the production of the quaternary ammonium salt can be a common commercially available heparin which meets the requirements of the Official Pharmacopoeia.

In a preferred feature of the invention, the esterification reaction is carried out by reacting from 0.8 to 1.1 stoichiometric equivalents of halogenated reagent R-CH₂-X, where R is a phenyl group which is non-substituted or substituted by a chlorine atom or a nitro group in the para position, and X is a chlorine atom, with a quantity of benzethonium salt of heparin such as to contain a stoichiometric equivalent of carboxylic groups in from 5 to 15 volumes, in respect of the weight of the heparin salt, in inert solvent selected from N,N-dimethylformamide, N,N-dimethylacetamide and/or methylene chloride.

In a more preferred feature of the invention, R represents non-substituted phenyl, the reaction solvent is N,N-dimethylformamide, the temperature is between 65°C and 75°C and the reaction time is between 1 and 3 hours.

Upon completion of the reaction, the mixture is cooled to ambient temperature and the ester of heparin is precipitated by the addition of a 10%-solution of sodium acetate in methyl alcohol.

The esters so obtained have chemical/physical features which are similar to those of esters prepared according to the cited prior art and a heparin having low molecular weight and the features corresponding to those of Enoxaparin (CID) which are listed in the European Official Pharmacopoeia is obtained therefrom by following the process of hydrolysis/de-polymerisation described in the examples of European patent application EP-40144 and American patent US-5389618.

The examples referred to below are a further nonlimiting illustration of the invention.

### EXAMPLE 1

15 grammes of benzethonium salt of heparin were dissolved in 150ml of N,N-dimethylformamide and there were added to the solution 0.79ml of benzyl chloride (d=1.1 purity 99%) and the reaction mixture was heated to 70°C for two hours. The reaction mixture was then cooled to ambient temperature and the ester was precipitated by the addition of 300ml of a 10%-solution of sodium acetate in methyl alcohol.

After filtration, the solid was washed with methyl alcohol and dried under vacuum; 5.01g of benzyl ester of heparin were obtained.

### EXAMPLE 2

The esterification reaction was carried out according to the same method described in example 1, the sole change being the use of 0.83ml of benzyl chloride. 5.04g of benzyl ester of heparin were obtained.

### EXAMPLE 3

The esterification reaction was carried out according to the same method described in example 1, the sole change being the use of 0.96ml of benzyl chloride. 5.03g of benzyl ester of heparin were obtained.

### EXAMPLE 4

A 2l-flask was filled under nitrogen with 60g of neutral heparin benzethonium salt which has been prepared beforehand and 480ml of dimethylformamide; the mixture was stirred at ambient temperature until dissolution was complete. 4.63g of benzyl chloride were added; the mixture was heated with stirring to approximately 50°C. The temperature and stirring were maintained for approximately 12 hours until a check by sampling during the reaction established that the reaction was complete. The mixture was cooled to ambient temperature. A solution prepared beforehand of 96g of anhydrous sodium acetate in 960ml of methanol was then added slowly; the temperature and stirring were maintained for 30 minutes. The wet product was filtered and put back into the flask, and 340ml of methanol were added. The mixture was stirred for 1 hour at ambient temperature and was then filtered and washed with 80ml of methanol. The wet product was then dried at reduced pressure and approximately 25g of heparin benzyl ester sodium salt were obtained.

The ester so obtained has then been subjected to a de-polymerisation treatment as described in the examples appended to European patent application EP-40144, obtaining from 5 to 7g of Enoxaparin conforming to European Pharmacopoeia.

## Claims

1. Process for the production of esters of heparin, **characterised in that** from 0.5 to 1.5 parts by weight of a halogenated reagent having the formula R-CH₂-X, where R is a phenyl group which is non-substituted or substituted by a halogen atom or by a nitro group, and X is a halogen atom, are reacted with from 8 to 16 parts by weight of one of the quaternary ammonium salts of heparin in from 60 to 150 parts by volume of an inert organic solvent selected from N,N-dimethylformamide, N,N-dimethylacetamide and/or methylene chloride, at a temperature of between 35°C and 60°C for a period of time of between 1 hour and 20 hours.

2. Process according to claim 1, **characterised in that** from 0.8 to 1.2 parts by weight of said halogenated reagent are reacted with from 10 to 14 parts by weight of said quaternary ammonium salt in from 80 to 120 parts by volume of said inert organic solvent.

3. Process according to claim 2, **characterised in that** 1 part by weight of said halogenated reagent is reacted with 12 parts by weight of said quaternary ammonium salt in 100 parts by volume of said inert organic solvent.

4. Process according to claims 1 to 3, **characterised in that** a quantity of quaternary ammonium salt of heparin such as to contain a stoichiometric equivalent of carboxylic groups is reacted with a quantity of between 0.6 and 1.5 stoichiometric equivalents of the halogenated reagent.

5. Process according to claims 1 to 3, **characterised in that** a quantity of quaternary ammonium salt of heparin such as to contain a stoichiometric equivalent of carboxylic groups is reacted with a quantity of between 0.8 and 1.1 stoichiometric equivalents of the halogenated reagent.

6. Process according to claims 1 to 3, **characterised in that** the quaternary ammonium salt of heparin is the benzethonium salt of heparin.

7. Process according to claims 1 to 3, **characterised in that** said halogenated reagent is selected from benzyl chloride, 4-chlorobenzyl chloride and 4-nitrobenzyl chloride.

8. Process according to any one of the preceding claims, **characterised in that** it is carried out in N,N-dimethylformamide.

9. Process according to any one of the preceding claims, **characterised in that** the reaction is carried out for a period of time of between 1 hour and 16 hours.

10. Process according to any one of the preceding claims, **characterised in that** the reaction is carried out for a period of time of between 1 and 3 hours.

11. Process according to any one of the preceding claims, **characterised in that** the reaction product is precipitated from the reaction medium by the addition of a solution of sodium acetate in methyl alcohol.

12. Process according to any one of the preceding claims, **characterised in that** X is chlorine.

13. Process for the production of Enoxaparin, **characterised in that** it includes a process for the production of heparin esters according to any one of the preceding claims.

## Patentansprüche

1. Verfahren zur Herstellung von Heparinestern, **dadurch gekennzeichnet, dass** 0,5 bis 1,5 Gewichtsteile eines halogenierten Reagens, das die Formel R-CH₂-X aufweist, worin R eine Phenylgruppe ist, welche nicht substituiert ist oder mit einem Halogenatom oder mit einer Nitrogruppe substituiert ist, und X ein Halogenatom ist, mit 8 bis 16 Gewichtsteilen von einem der quartären Heparin-Ammoniumsalze in 60 bis 150 Volumenteilen eines inerten organischen Lösungsmittels, das aus N,N-Dimethylformamid, N,N-Dimethylacetamid und/oder Methylenchlorid ausgewählt ist, bei einer Temperatur von zwischen 35°C und 60°C für einen Zeitraum von zwischen 1 Stunde und 20 Stunden umgesetzt werden.

2. Verfahren gemäß Anspruch 1, **dadurch gekennzeichnet, dass** 0,8 bis 1,2 Gewichtsteile des halogenierten Reagens mit 10 bis 14 Gewichtsteilen des quartären Ammoniumsalzes in 80 bis 120 Gewichtsteilen des inerten organischen Lösungsmittels umgesetzt werden.

3. Verfahren gemäß Anspruch 2, **dadurch gekennzeichnet, dass** 1 Gewichtsteil des halogenierten Reagens mit 12 Gewichtsteilen des quartären Ammoniumsalzes in 100 Volumenteilen des inerten organischen Lösungsmittels umgesetzt werden.

4. Verfahren gemäß Ansprüchen 1 bis 3, **dadurch gekennzeichnet, dass** eine Menge des quartären Heparin-Ammoniumsalzes, welche ein stöchiometrisches Äquivalent an Carboxylgruppen enthält, mit einer Menge von zwischen 0,6 und 1,5 stöchiometrischen Äquivalenten des halogenierten Reagens umgesetzt wird.

5. Verfahren gemäß Ansprüchen 1 bis 3, **dadurch gekennzeichnet, dass** eine Menge des quartären Heparin-Ammoniumsalzes, welche ein stöchiometrisches Äquivalent an Carboxylgruppen enthält, mit einer Menge von zwischen 0,8 und 1,1 stöchiometrischen Äquivalenten des halogenierten Reagens umgesetzt wird.

6. Verfahren gemäß Ansprüchen 1 bis 3, **dadurch gekennzeichnet, dass** das quartäre Heparin-Ammoniumsalz das Heparin-Benzethoniumsalz ist.

7. Verfahren gemäß Ansprüchen 1 bis 3, **dadurch gekennzeichnet, dass** das halogenierte Reagens aus Benzylchlorid, 4-Chlorbenzylchlorid und 4-Nitrobenzylchlorid ausgewählt wird.

8. Verfahren gemäß irgendeinem der vorangehenden Ansprüche, **dadurch gekennzeichnet, dass** es in N,N-Dimethylformamid durchgeführt wird.

9. Verfahren gemäß irgendeinem der vorangehenden Ansprüche, **dadurch gekennzeichnet, dass** die Reaktion in einem Zeitraum von zwischen 1 Stunde und 16 Stunden durchgeführt wird.

10. Verfahren gemäß irgendeinem der vorangehenden Ansprüche, **dadurch gekennzeichnet, dass** die Reaktion in einem Zeitraum von zwischen 1 und 3 Stunden durchgeführt wird.

11. Verfahren gemäß irgendeinem der vorangehenden Ansprüche, **dadurch gekennzeichnet, dass** das Reaktionsprodukt durch Zugabe einer Lösung von Natriumacetat in Methylalkohol aus dem Reaktionsmedium präzipitiert wird.

12. Verfahren gemäß irgendeinem der vorangehenden Ansprüche, **dadurch gekennzeichnet, dass** X Chlor ist.

13. Verfahren zur Herstellung von Enoxaparin, **dadurch gekennzeichnet, dass** es ein Verfahren zur Herstellung von Heparinestern gemäß irgendeinem der vorangehenden Ansprüche einschließt.

## Revendications

1. Procédé de production d'esters d'héparine, **caractérisé en ce que** 0,5 à 1,5 partie en poids d'un réactif halogéné de formule R-CH₂-X, dans laquelle R représente un groupe phényle qui est non substitué ou substitué par un atome d'halogène ou par un groupe nitro, et X représente un atome d'halogène, est mise à réagir avec 8 à 16 parties en poids d'un des sels d'ammonium quaternaire de l'héparine dans 60 à 150 parties en volume d'un solvant organique inerte choisi parmi le N,N-diméthylformamide, le N,N-diméthylacétamide et/ou le chlorure de méthylène, à une température comprise entre 35°C et 60°C, pendant une durée comprise entre 1 heure et 20 heures.

2. Procédé selon la revendication 1, **caractérisé en ce que** 0,8 à 1,2 partie en poids dudit réactif halogéné est mise à réagir avec 10 à 14 parties en poids dudit sel d'ammonium quaternaire dans 80 à 100 parties en volume dudit solvant organique inerte.

3. Procédé selon la revendication 2, **caractérisé en ce que** 1 partie en poids dudit réactif halogéné est mise à réagir avec 12 parties en poids dudit sel d'ammonium quaternaire dans 100 parties en volume dudit solvant organique inerte.

4. Procédé selon les revendications 1 à 3, **caractérisé en ce qu'**une quantité de sel d'ammonium quaternaire de l'héparine telle qu'elle contient un équivalent stoechiométrique de groupes carboxyliques est mise à réagir avec une quantité comprise entre 0,6 et 1,5 équivalent stoechiométrique du réactif halogéné.

5. Procédé selon les revendications 1 à 3, **caractérisé en ce qu'**une quantité de sel d'ammonium quaternaire de l'héparine telle qu'elle contient un équivalent stoechiométrique de groupes carboxyliques est mise à réagir avec une quantité comprise entre 0,8 et 1,1 équivalent stoechiométrique du réactif halogéné.

6. Procédé selon les revendications 1 à 3, **caractérisé en ce que** le sel d'ammonium quaternaire de l'héparine est le sel de benzéthonium de l'héparine.

7. Procédé selon les revendications 1 à 3, **caractérisé en ce que** ledit réactif halogéné est choisi parmi le chlorure de benzyle, le chlorure de 4-chlorobenzyle et le chlorure de 4-nitrobenzyle.

8. Procédé selon l'une quelconque des revendications précédentes, **caractérisé en ce qu'**il est réalisé dans du N,N-diméthylformamide.

9. Procédé selon l'une quelconque des revendications précédentes, **caractérisé en ce que** la réaction est réalisée pendant une durée comprise entre 1 heure et 16 heures.

10. Procédé selon l'une quelconque des revendications précédentes, **caractérisé en ce que** la réaction est réalisée pendant une durée comprise entre 1 heure et 3 heures.

11. Procédé selon l'une quelconque des revendications précédentes, **caractérisé en ce que** le produit de la réaction est précipité dans le milieu réactionnel par l'addition d'une solution d'acétate de sodium dans de l'alcool méthylique.

12. Procédé selon l'une quelconque des revendications précédentes, **caractérisé en ce que** X représente un atome de chlore.

13. Procédé de production d'énoxaparine, **caractérisé en ce qu'**il comprend un procédé de production d'esters d'héparine selon l'une quelconque des revendications précédentes.
